# EUROPEAN PATENT APPLICATION

(11) **EP 2 911 337 A1**
(43) Date of publication of application: **26.08.2015**
(21) Application number: 13845519.1
(22) Date of filing: 27.08.2013
(51) Int. Cl.: H04L 12/18

(54) **OPERATION EXECUTION METHOD AND DEVICE**

(30) Priority: 11.10.2012 CN 201210384678
(71) Applicant: ZTE Corporation, Shenzhen, Guangdong 518057 (CN)
(72) Inventor: LIU, Guoman, Shenzhen Guangdong 518057 (CN); ZHANG, Baoya, Shenzhen Guangdong 518057 (CN); MA, Yuxia, Shenzhen Guangdong 518057 (CN)
(74) Representative: Chimini, Francesco
(86) International application number: PCT/CN2013/082405
(87) International publication number: WO 2014/056360

(57) **Abstract**

Disclosed are an operation execution method and device. The method includes that: a leaf node determines that the leaf node needs to execute a predetermined operation (Step 202) ; and the leaf node notifies an upstream node on a multicast path where is the leaf node locates, to execute the predetermined operation on a branch path where the leaf node locates (Step 204). According to the disclosed embodiment, it is solved the problem in the related art that the multicast service is processed at the root node, which may cause influence on the normal work on the service of other branch paths, and the maintainer can conveniently perform the performance measurement on the multicast branch path without influence on the use of other users over the service.

## Description

### Technical Field

The present invention relates to the field of communication, including e.g., a method and device for executing an operation.

### Background

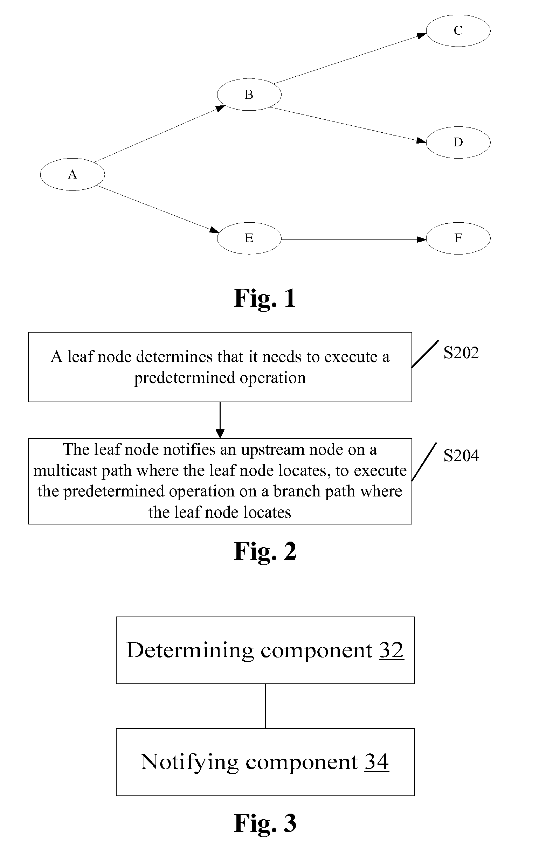

For an operation (for example, Lock) state in the Point-to-Point (P2P) service, because the relationship of the P2P service is point to point, when an operation instruction (for example, Lock instruction) is issued to an end node, the operation on the service can be processed (for example, stopping the transmission of the service) directly on a source end node, and operation information (for example, Lock information) is transmitted to the other end node, so that the other end node can perform the corresponding processing (for example, stopping service transmission on a P2P path) on the service. However, for a multicast service such as a Point-to-Multi-Point (P2MP) or Multi-Point-to-Multi-Point (MP2MP) service, the relationship is point to multi-point. When a certain branch path needs to be executed an operation (for example, Lock), and the service is processed (for example, stopping the transmission of the multicast service) on a source end, it may cause influence on the normal work (for example, service transmission) of the service on other branch paths. Fig. 1 is a structure diagram of a multicast path according to the related art, and as shown in Fig. 1, for the Lock operation, when the A-B-C branch path needs to be locked, and the transmission of the service is stopped at the end A, the transmission of the service on the A-B-D branch path may be influenced.

For the problem that the multicast service is processed at the root node, which may cause influence on the normal work of the service on other branch paths in the related art, there is yet no effective solution.

### Summary of the Invention

For the problem that the multicast service is processed at the root node, which may cause influence on the normal work of the service on other branch paths in the related art, a method and device for executing an operation are provided, so as to at least solve the problem.

According to one aspect of the present invention, a method for executing an operation, comprising: determining, by a leaf node, that the leaf node needs to execute a predetermined operation; and notifying, by the leaf node, an upstream node on a multicast path where the leaf node locates, to execute the predetermined operation on a branch path where the leaf node locates.

According to an embodiment of the present invention, notifying, by the leaf node, the upstream node on the multicast path where the leaf node locates, to execute the predetermined operation on the branch path where the leaf node locates comprises : transmitting, by the leaf node, a second information message to a first upstream node directly-adjacent to the leaf node on the multicast path where the leaf node locates, wherein the second information message is used for indicating that the branch path where the leaf node locates needs to execute the predetermined operation; judging, by the first upstream node, whether there is a branch path on which the predetermined operation does not need to be executed, on the first upstream node according to the second information message; based on that a judgment result is that there is the branch path on which the predetermined operation does not need to be executed, executing, by the first upstream node, the predetermined operation on the branch path where the leaf node locates; and based on that the judgment result is that there is no branch path on which the predetermined operation does not need to be executed, transmitting, by the first upstream node, a second information message to a directly-adjacent upstream node on a multicast path where the first upstream node locates, so so that a step of judging whether there is the branch path on which the predetermined operation does not need to be executed according to the second information message is repeatedly executed.

According to an embodiment of the present invention, the second information message carries an identifier of the multicast path and/or an identifier of the branch path on which the predetermined operation needs to be executed, and judging, by the first upstream node, whether there is the branch path on which the predetermined operation does not need to be executed, on the first upstream node according to the second information message comprises: judging, by the first upstream node, whether there is the branch path on which the predetermined operation does not need to be executed according to the identifier of the multicast path and/or the identifier of the branch path on which the predetermined operation needs to be executed.

According to an embodiment of the present invention, determining, by the leaf node, that the leaf node needs to execute the predetermined operation comprises: receiving, by the leaf node, an operation instruction corresponding to the predetermined operation; and/or, receiving, by the leaf node, a first information message from a root node, wherein the first information message is used for indicating the leaf node to execute the predetermined operation.

According to an embodiment of the present invention, the first information message carries an identifier of the branch path on which the predetermined operation needs to be executed and/or an identifier of the leaf node, and determining, by the leaf node, that the leaf node needs to execute the predetermined operation comprises: determining, by the leaf node, that the leaf node needs to execute the predetermined operation according to the identifier of the branch path on which the predetermined operation needs to be executed and/or the identifier of the leaf node.

According to an embodiment of the present invention, the predetermined operation is a service Lock operation.

According to another aspect of the present invention, a method for executing an operation, comprising: receiving, by an upstream node on a multicast path where a leaf node locates, a notice from the leaf node to notify the upstream node to execute a predetermined operation on a branch path where the leaf node locates; and judging, by the upstream node, whether the predetermined operation is to be executed on the branch path where the leaf node locates according to the notice.

According to an embodiment of the present invention, judging, by the upstream node, whether the predetermined operation is to be executed on the branch path where the leaf node locates according to the notice comprises: judging, by the upstream node, whether there is a branch path on which a predetermined operation corresponding to a second information message does not need to be executed according to the notice; based on that a judgment result is that there is the branch path on which the predetermined operation corresponding to the second information message does not need to be executed according to the notice, executing, by the upstream node, the predetermined operation on the branch path where the leaf node locates; and based on that the judgment result is that there is no branch path on which the predetermined operation corresponding to the second information message does not need to be executed according to the notice, transmitting, by the upstream node, the notice to a directly-adjacent upstream node on a multicast path where the upstream node locates, so that a step of judging whether there is the branch path on which the predetermined operation does not need to be executed according to the notice is repeatedly executed.

According to an embodiment of the present invention, judging, by the upstream node, whether the predetermined operation is to be to executed on the branch path where the leaf node locates according to the notice comprises: receiving, by the upstream node, a second information message from the leaf node, wherein the second information message carries an identifier of the multicast path and/or an identifier of the branch path on which the predetermined operation needs to be executed; and judging, by the upstream node, whether there is the branch path on which the predetermined operation does not need to be executed or not according to the identifier of the multicast path and/or the identifier of the branch path on which the predetermined operation needs to be executed.

According to an embodiment of the present invention, the predetermined operation is a service Lock operation.

According to another aspect of the present invention, a device for executing an operation, located in a leaf node, comprising: a determining component, configured to determine that the leaf node needs to execute a predetermined operation; and a notifying component, configured to notify an upstream node on a multicast path where the leaf node locates, to execute the predetermined operation on a branch path where the leaf node locates.

According to another aspect of the present invention, a device for executing an operation, located in an upstream node on a multicast path where a leaf node locates, comprising: a receiving component, configured to receive a notice from the leaf node, to notify the upstream node to execute a predetermined operation on a branch path where the leaf node locates; and a judging component, configured to judge whether the predetermined operation is to be executed on the branch path where the leaf node locates according to the notice.

According to another aspect of the present invention, a the judging component comprises: a judging element, configured to judge whether there is a branch path on which a predetermined operation corresponding to a second information message does not need to be executed according to the notice; an executing element, configured to, based on that a judgment result is that there is the branch path on which the predetermined operation corresponding to the second information message does not need to be executed according to the notice, execute the predetermined operation on the branch path where the leaf node locates; and a transmitting element, configured to, based on that the judgment result is that there is no branch path on which the predetermined operation corresponding to the second information message does not need to be executed according to the notice, transmit the notice to a directly-adjacent upstream node on a multicast path where the upstream node locates, so that a step of judging whether there is the branch path on which the predetermined operation does not need to be executed according to the notice is repeatedly executed.

According to the embodiment of the present invention, the leaf node determines that the leaf node needs to execute the predetermined operation, and the leaf node notifies the upstream node on the multicast path where is the leaf node locates, to execute the predetermined operation on the branch path where the leaf node locates, so that it is solved the problem in the related art that the multicast service is processed at the root node, which may cause influence on the normal work of the service on other branch paths, and a maintainer can conveniently perform the performance measurement on the multicast branch path without influence on the use of other users over the service.

### Brief Description of the Drawings

The drawings are described here to provide further understanding of the present invention, and form a part of the present invention. The schematic embodiments and the description of the embodiment of the present invention are adopted to explain the present invention, and do not form improper limits to the present invention. In the drawings:
Fig. 1 is a structure diagram of a multicast path according to the related art;
Fig. 2 is a flowchart of a method for executing an operation according to an embodiment of the present invention;
Fig. 3 is a structure diagram of a device for executing an operation according to an embodiment of the present invention;
Fig. 4 is a flowchart of another method for executing the operation according to an example embodiment of the present invention;
Fig. 5 is a structure diagram of another device for executing an operation according to an embodiment of the present invention;
Fig. 6 is a structure diagram of a judging component 54 according to an example embodiment of the present invention;
Fig. 7 is a relationship diagram of components in the system according to embodiment 1 of the present invention;
Fig. 8 is a diagram of a processing flow of a root node according to embodiment 1 of the present invention;
Fig. 9 is a diagram of a processing flow of an intermediate node according to embodiment 1 of the present invention;
Fig. 10 is diagram of a processing flow of a leaf node according to embodiment 1 of the present invention; and
Fig. 11 is a diagram of a flow of a Lock system of the multicast branch path according to embodiment 1 of the present invention.

### Detailed Description of the Embodiments

The present invention is described below with reference to the drawings and embodiments in detail. It is important to note that the embodiments of the present invention and the characteristics in the embodiments can be combined if there is no conflict.

A method for executing an operation is provided in an example of the present invention, Fig. 2 is a flowchart of a method for executing an operation according to an example embodiment of the present invention, and as shown in Fig. 2, the method includes the following steps:
Step 202: a leaf node determines that the leaf node needs to execute a predetermined operation; and
Step 204: the leaf node notifies an upstream node on a multicast path where the leaf node locates, to execute the predetermined operation on a branch path where the leaf node locates.

According to the example embodiment, when the leaf node determines that the leaf node needs to execute the predetermined operation, the leaf node notifies the upstream node on the multicast path where the leaf node locates, so as to enable the upstream intermediate node to execute the predetermined operation on the branch path where the leaf node locates. The predetermined operation is no longer to be executed at the root node, so that the influence on the normal service of other branch paths is reduced. It is solved the problem in the related art that the multicast service is processed at the root node, which may cause influence on the normal work of the service on the other branch paths, and the maintainer can conveniently perform the performance measurement on the multicast branch path without influence on the use of other users over the service.

Optionally, the predetermined operation may be service Lock operation. Of course, the predetermined operation may also be other operation such as Unlock.

As an example implementation mode, the leaf node may notify the upstream node to execute the predetermined operation on the branch path where the leaf node locates in a level-by-level reporting manner. For example, the leaf node transmits a second information message to a directly-adjacent upstream node (called a first upstream node herein for short) on the multicast path where is the leaf node locates, wherein the second information message is used for indicating that the branch path where the leaf node locates needs to execute the predetermined operation; the first upstream node judges whether there is a branch path on which the predetermined operation does not need to be executed, on the first upstream node according to the second information message; based on that a judgment result is that there is the branch path on which the predetermined operation does not need to be executed, the first upstream node may execute the predetermined operation on the branch path where the leaf node locates; and based on that the judgment result is that there is no branch path on which the predetermined operation does not need to be executed, the first upstream node may transmit a second information message to a directly-adjacent upstream node on a multicast path where the first upstream locates, so that the step of judging whether there is a branch path on which the predetermined operation does not need to be executed according to the second information message is level by level executed. Through the above manner, the second information message can be conveniently transmitted to an upstream node which there is a branch path on which the predetermined operation does not need to be executed. Therefore, the predetermined operation is executed on the branch path on which the predetermined operation needs to be executed, and no operation is performed on the branch path on which the predetermined operation does not need to be executed. The influence on the normal service implementation of the other branch paths on which the predetermined operation does not need to be executed is completely avoided, and practicability of the solution is improved.

Optionally, the second information message may carry an identifier of the multicast path and/or an identifier of the branch path on which the predetermined operation needs to be executed. The first upstream node and the upstream intermediate node of the first upstream can judge whether there is a branch path on which the predetermined operation does not need to be executed according to the identifier of the multicast path and/or the identifier of the branch path on which the predetermined operation needs to be executed. For example, the first upstream node can judge whether the identifiers of all downstream branch paths included by the first upstream node are received or not, and based on that the identifiers of all downstream branch paths included by the first upstream node are not received, the first upstream node can determine that there is the branch path on which the predetermined operation does not need to be executed.

As an implementation mode, the leaf node can determine that the leaf node needs to execute the predetermined operation in manners as follows : manner 1: the leaf node receives an operation instruction corresponding to the predetermined operation; and manner 2: the leaf node receives a first information message from a root node, wherein the first information message is used for indicating the leaf node to execute the predetermined operation.

Optionally, the first information message may carry an identifier of the branch path on which the predetermined operation needs to be executed and/or an identifier of the leaf node. Under the condition, the leaf node can determine that the leaf node needs to execute the predetermined operation according to the identifier of the branch path on which the predetermined operation needs to be executed and/or the identifier of the leaf node..

Corresponding to the method for executing the operation, a device for executing the operation is further provided in the embodiment of the present invention, which is located in a leaf node and configured to implement the embodiment and the example implementation modes, and that what has been described will not be repeated. For example, a term "component", used below, is a combination of software and/or hardware for realizing preset functions. The device described in the following embodiment is preferably implemented by software, but the implementation of the device with hardware or the combination of software and hardware is also possible and conceived.

Fig. 3 is a structure diagram of a device for executing an operation according to an embodiment of the present invention, and as shown in Fig. 3, the device includes: a determining component 32 and a notifying component 34. Each component is describedbelow in detail.

The determining component 32 is configured to determine that the leaf node needs to execute a predetermined operation; and the notifying component 34 is connected with the determining component 32, and is configured to notify an upstream node on a multicast path where the leaf node locates, to execute the predetermined operation on a branch path where the leaf node locates.

According to the components in the embodiment, when the leaf node determines that the leaf node needs to execute the predetermined operation through the determining component 32, the leaf node notifies the upstream node on the multicast path where the leaf node locates through the notifying component 34, so as to enable the upstream intermediate node to execute the predetermined operation on the branch path where the leaf node locates. The predetermined operation is no longer to be executed at the root node, so that the influence on the normal service of other branch paths is reduced. It is solved the problem in the related art that the multicast service is processed at the root node, which may cause influence on the normal work of the service on the other branch paths, and the maintainer can conveniently perform the performance measurement on the multicast branch path without influence on the use of other users over the service.

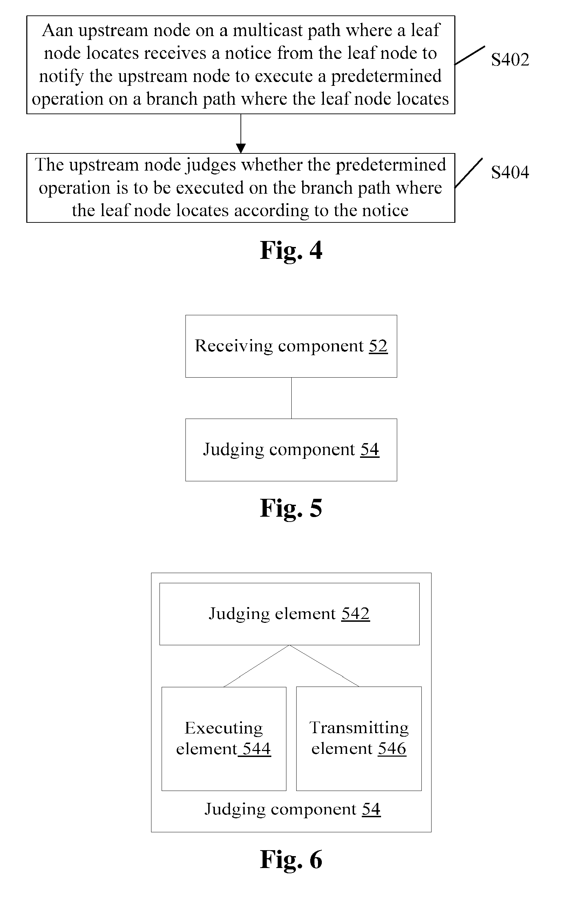

Another method for executing the operation is further provided in the example embodiment of the present invention. Fig. 4 is a flowchart of another method for executing the operation according to an example embodiment of the present invention, and as shown in Fig. 4, the method includes the following steps:
Step 402: an upstream node, on a multicast path where a leaf node locates receives, a notice from the leaf node to notify the upstream node to execute a predetermined operation on a branch path where the leaf node locates; and
Step 404: the upstream node judges whether the predetermined operation is to be executed on the branch path where the leaf node locates according to the notice.

According to steps in the example embodiment of the present invention, when the upstream node receives, from the downstream leaf node on the multicast path, the notice which is configured to notify the upstream node to execute the predetermined operation on the branch path where the leaf node locates, the upstream node judges whether the predetermined operation is to be executed by the upstream node on the branch path where the leaf node locates according to the notice. Therefore, the predetermined operation is executed by the upstream intermediate node rather than a root node. The influence on the normal service of the other branch paths is reduced. It is solved the problem in the related art that the multicast service is processed at the root node, which may cause influence on the normal work of the other branch paths, and the maintainer can conveniently perform the performance measurement on the multicast branch path without influence on the use of other users over the service.

As an example implementation mode, the upstream node can judge whether there is a branch path on which the predetermined operation corresponding to a second information message does not need to be executed according to the notice, so as to judge whether the predetermined operation is executed by the upstream node on the branch path where the leaf node locates. For example, based on that a judgment result is that there is the branch path on which the predetermined operation corresponding to the second information message does not need to be executed according to the notice, the upstream node can execute the predetermined operation on the branch path where the leaf node locates; and based on that the judgment result is that there is no branch path on which the predetermined operation corresponding to the second information message does not need to be executed according to the notice, the upstream node can transmit the notice to a directly-adjacent upstream node on a multicast path where the upstream node locates, so that the step of judging whether there is the branch path on which the predetermined operation does not need to be executed according to the notice is repeatedly level by level executed. In such a manner, the practicability of the solution is improved.

Optionally, the upstream node can judge whether there is the branch path on which the predetermined operation does not need to be executed by receiving the second information message from the leaf node. For example, the second information message may carry an identifier of the multicast path and/or an identifier of the branch path on which the predetermined operation needs to be executed. The upstream node can judge whether there is the branch path on which the predetermined operation does not need to be executed according to the identifier of the multicast path and/or the identifier of the branch path on which the predetermined operation needs to be executed. For example, the upstream node can judge whether the identifiers of all downstream branch paths included by the upstream node are received, and based on that identifiers of all downstream branch paths included by the upstream node are not received, the upstream node can determine that there is the branch path on which the predetermined operation does not need to be executed.

Optionally, the predetermined operation may be a service Lock operation. Of course, the predetermined operation may also be the other operation such as Unlock operation.

Corresponding to the other method for executing an operation, a device for executing an operation is further provided in the embodiment of the present invention, which is located in an upstream node on a multicast path where a leaf node locates. The device is configured to implement the embodiment and the example implementation modes, and that what has been described will not be repeated. For example, a term "component", used below, is a combination of software and/or hardware for realizing preset functions. The device described in the following embodiment is preferably implemented by software, but the implementation of the device with hardware or the combination of software and hardware is also possible and conceived.

Fig. 5 is a structure diagram of another device for executing an operation according to an embodiment of the present invention, and as shown in Fig. 5, the device includes: a receiving component 52 and a judging component 54. Each component is described below in detail.

The receiving component 52 is configured to receive a notice from the leaf node, to notify the upstream node to execute a predetermined operation on a branch path where the leaf node locates; and the judging component 54 is connected with the receiving component 52, and is configured to judge whether the predetermined operation is to be executed on the branch path where the leaf node locates according to the notice.

According to the above components in the example embodiment, when the upstream node receives the notice from the downstream leaf node on the multicast path through the receiving component 52, to notify the upstream node to execute the predetermined operation on the branch path where the leaf node locates, the upstream node judges whether the predetermined operation is to be executed on the branch path where the leaf node locates according to the notice through the judging component 54, so that the predetermined operation is executed by the upstream intermediate node rather than a root node. The influence on the normal service of other branch paths is reduced. It is solved the problem in the related art that the multicast service is processed at the root node, which may cause influence on the normal work of the service on the other branch paths, and the maintainer can conveniently perform the performance measurement on the multicast branch path without influence on the use of other users over the service.

Fig. 6 is a structure diagram of the judging component 54 according to an example embodiment of the present invention, and as shown in Fig. 6, the judging component 54 may include: a judging element 542, configured to judge whether there is a branch path on which the predetermined operation corresponding to a second information message does not need to be executed according to the notice; an executing element 544, connected with the judging element 542 and configured to, based on that a judgment result of the judging element 542 is that there is the branch path on which the predetermined operation corresponding to the second information message does not need to be executed according to the notice, execute the predetermined operation on the branch path where the leaf node locates; and a transmitting element 546, connected with the judging element 542 and configured to, based on that the judgment result of the judging element 542 is that there is no branch path on which the predetermined operation corresponding to the second information message does not need to be executed according to the notice, transmit the notice to a directly-adjacent upstream node on a multicast path where the upstream node locates, so that the step of judging whether there is the branch path on which the predetermined operation does not need to be executed according to the notice is repeatedly executed.

Description is given below with reference to the example embodiments, and the following example embodiments combine the abovementioned embodiments and their preferred implementation modes.

In the following preferred embodiments, a method and system for implementing the Lock operation of the multicast branch path are provided. The implementation of a service Lock function for a multicast branch path with a Lock instruction such as Lock and an Operation Administration and Maintenance (OAM) message in the field of OAM is described below as an example. According to the method for implementing the Lock operation of the multicast branch path in the following example embodiments, after receiving the Lock information fed back to an upstream node from a leaf node to Lock the service, the Lock operation on the service is executed by the upstream node rather than a source-end root node, so that the influence on the transmission of the service on other branch paths is avoided.

### Embodiment 1

A Lock method is provided in the example embodiment of the present invention, which can realize the service Lock operation on the multicast branch path without influencing the service Lock of the other branch paths; and in addition, the influence on the performance measurement (for example: LM and DM) of the branch paths is reduced as much as possible.

The following technical solution is adopted for the method and system for implementing the Lock operation disclosed by the example embodiment:

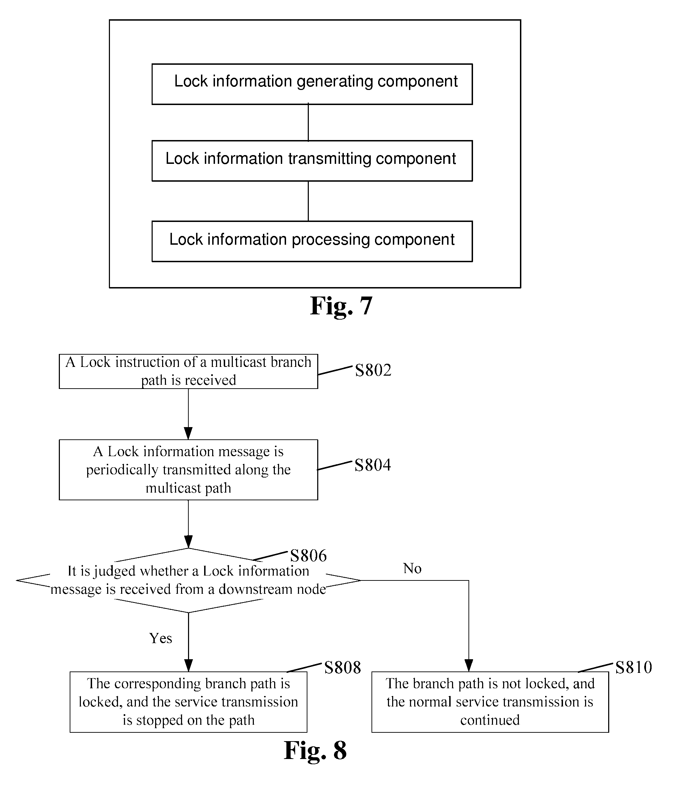

Fig. 7 is a relationship diagram of components in the system according to embodiment 1 of the present invention, and as shown in Fig. 7, the system mainly includes the following three components:
a Lock information generating component (realizing a generating part function of the notifying component 34): mainly configured to generate an extended Lock information message, wherein Table 1 is a structural table of the extended Lock information message according to embodiment 1 of the present invention:

**Table 1**

| 0001 | version | Reserve | Channel Type |
|---|---|---|---|
| Lock instruction Protocol Data Unit (PDU) | | | |
| Multicast ID Type Length Value (TLV) (option) | | | |
| Branch ID (egress node ID) TLV | | | |

Table 2 is a structural table of the multicast ID TLV in Table 1 according to embodiment 1 of the present invention:

**Table 2**

| | | |
|---|---|---|
| Type | Length | Multicast ID |

Table 3 is a structural diagram of the multicast branch path TLV in Table 1 according to embodiment 1 of the present invention:

**Table 3**

| | | |
|---|---|---|
| Type | Length | Branch id (egress node id) |

As shown in Table 1 to Table 3, the extended Lock information message carries the ID of the multicast path and/or the ID of the locked branch path and/or an address of the leaf node to be locked;
a Lock information transmitting component (realizing the transmitting notice function of the notifying component 34 and the function of the receiving component 52) : mainly configured to transmit the Lock information message to the leaf node or the upstream node through a control plane or management plane or data plane; and
a Lock information processing component (realizing the functions of the determining component 32 and the judging component 54): mainly configured to receive and analyze the Lock information message so as to perform corresponding processing operation.

For the network structure shown in Fig. 1, when a certain multicast branch path is locked, the method for executing the Lock operation of the multicast branch path in the example embodiment includes the following steps:
step 1: when the source-end root node on the multicast path or the leaf node on the branch path of the multicast path receives a Lock instruction, the source-end root node on the multicast path generates the Lock information message (including the ID of the branch path to be locked or the ID of the corresponding leaf node), and transmits the Lock information message to each leaf node along the multicast path;
step 2: when the leaf node receives the Lock instruction or receives the Lock information message transmitted by the source-end root nod, the leaf node analyses, and judges whether the Lock operation needs to be executed according to the ID of the branch path to be locked or the ID of the leaf node on the branch path, which are carried in the Lock information message;
step 3: when the leaf node determines that the Lock operation needs to be executed, the leaf node generates an extended Lock information message, and transmits the extended Lock information message to an directly-adjacent upstream node on the multicast path through the control or management or transmission plane;
step 4: when the upstream node on the multicast path receives the Lock information message from the downstream node, the upstream node performs reception processing. The upstream node judges whether there are downstream nodes on branch paths on which the Lock operation does not need to be executed on the upstream node according to the multicast ID of the multicast path or/and the ID of the branch path to be locked in the Lock information message. Based on that the judgment result is that there are downstream nodes on branch paths on which the Lock operation does not need to be executed on the upstream node, the Lock operation on the service is performed on the branch path to be locked; and
step 5: Based on that the judgment result is that there are not downstream nodes on branch paths on which the Lock operation does not need to be executed on the upstream node, the upstream node continues transmitting the Lock information message to an upstream node on the multicast path. The Lock information message is stopped continuing forwarding until the Lock information message is transmitted to the source-end root node.

By the system and the steps, the Lock operation over the service on the branch path of the multicast path can be realized, so that the maintainer can conveniently perform the performance measurement on the multicast branch path without influencing the use of the other users over the service.

Fig. 8 is a flowchart of a processing flow of a root node according to embodiment 1 of the present invention, and as shown in Fig. 8, the processing flow of the root node may include the following steps :
Step 802 : the root node receives a Lock instruction of a multicast branch path;
Step 804 : the root node periodically transmits a Lock information message along the multicast path;
Step 806: the root node judges whether a Lock information message is received from a downstream node or not, and based on that the judgment is that the Lock information message is received from the downstream, it is indicated that there is the branch path on which the correspond operation does not need to be executed only on the root node, and Step 808 is executed, otherwise Step 810 is executed;
Step 808 : the corresponding branch path is locked, and the service transmission on the path is stopped; and
Step 810: the branch path is not locked, and the normal service transmission is continued.

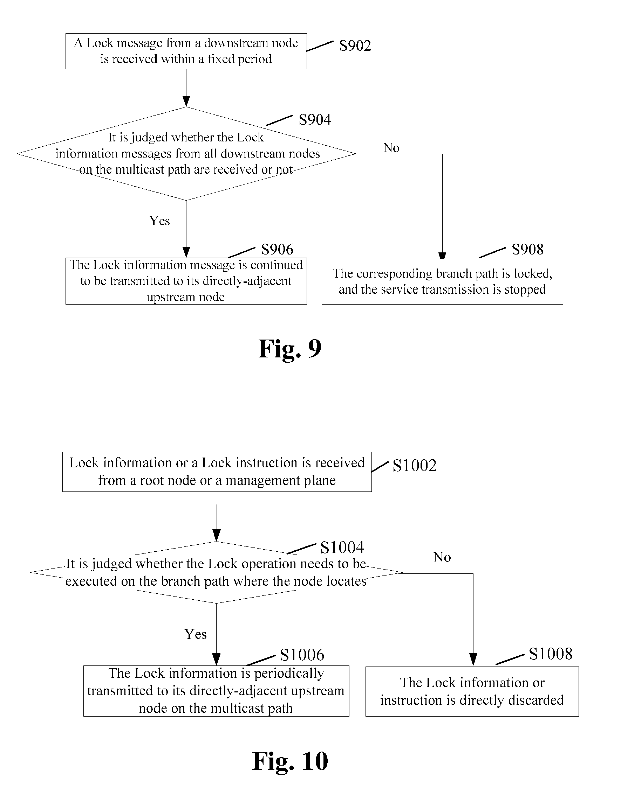

Fig. 9 is a diagram of a processing flow of an intermediate node according to embodiment 1 of the present invention, and as shown in Fig. 9, the processing flow of the intermediate node may include the following steps:
Step 902: the intermediate node receives a Lock information message from its downstream node within a fixed period;
Step 904: the intermediate node judges whether the Lock information messages from all downstream nodes on the multicast path are received or not, and based on that the judgment result is that the Lock information messages from all downstream nodes on the multicast path are received, it is indicated that there is no branch path on the which the corresponding operation does not need to be executed on the intermediate node, and Step 906 is executed, otherwise, it is indicated that there is the branch path on the which the corresponding operation does not need to be executed on the intermediate node, and Step 908 is executed;
Step 906: the intermediate node continues transmitting the Lock information message to its directly-adjacent upstream node; and
Step 908: the intermediate node locks the corresponding branch path, and stops service transmission on the path.

Fig. 10 is a diagram of a processing flow of a leaf node according to embodiment 1 of the present invention, and as shown in Fig. 1, the processing flow of the leaf node may include the following steps :
Step 1002: the leaf node receives a Lock information message or a Lock instruction from a root node or a management plane;
Step 1004: the leaf node judges whether the Lock operation needs to be executed on the leaf node or a branch where the leaf node locates. Based on that the judgment result is that the Lock operation needs to be executed on the leaf node or a branch where the leaf node locates, Step 1006 is executed, and based on that the judgment result is that the Lock operation does not need to be executed on the leaf node or a branch where the leaf node locates, Step 1008 is executed;
Step 1006: the leaf node periodically transmits the Lock information message to its directly-adjacent upstream node on the multicast path; and
Step 1008: the leaf node directly discards the Lock information message or the Lock instruction, and does not perform any processing operation.

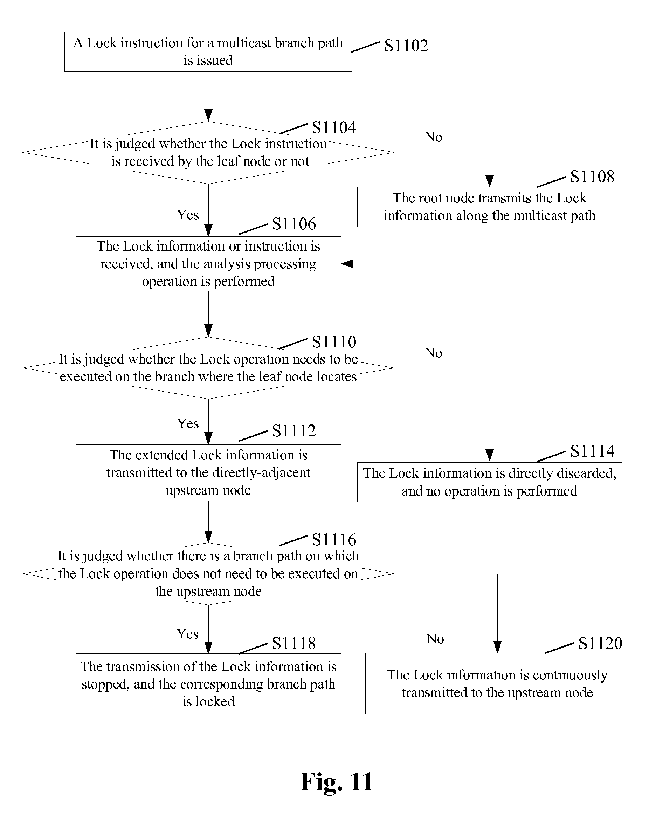

Fig. 11 is a diagram of a flow of a Lock system of the multicast branch path according to embodiment 1 of the present invention, and as shown in Fig. 11, the system flow includes all flows of the root node, the intermediate node and the leaf node. The system flow may include the following steps:
Step 1102: a Lock instruction for the multicast branch path is issued;
Step 1104: the leaf node judges whether the Lock instruction is received or not, based on that the judgment result is that the Lock instruction is received, Step 1106 is executed, and based on that the judgment result is that the Lock instruction is not received, Step 1008 is executed;
Step 1106: the leaf node performs analysis processing on the Lock instruction or a Lock information message (realizing a function of the abovementioned first information message) from the root node, and Step 1110 is executed;
Step 1108: the root node receives the Lock instruction, and transmits the Lock information message along the multicast path, and Step 1106 is executed;
Step 1110: the leaf node judges whether the Lock operation needs to be executed on the leaf node or the branch where the leaf node locates. Based on that the Lock operation needs to be executed on the leaf node or the branch where the leaf node locates, Step 1112 is executed, and based on that the Lock operation does not need to be executed on the leaf node or the branch where the leaf node locates, Step 1114 is executed;
Step 1112: the leaf node generates the extended Lock information (realizing a function of the abovementioned second information message), and transmits the extended Lock information to the directly-adjacent upstream node, and Step 1116 is executed;
Step 1114: the Lock information message or the Lock instruction is directly discarded, and no operation is performed;
Step 1116: the upstream intermediate node of the leaf node judges whether there is a branch path on which the Lock operation does not need to be executed. Based on that the judgment result is that there is a branch path on which the Lock operation does not need to be executed, Step 1118 is executed. and based on that the judgment result is that there is a branch path on which the Lock operation does not need to be executed, S1120 is executed;
Step 1118: the transmission of the Lock information message is stopped, and the corresponding branch path is locked; and
Step 1120: the Lock information message is continuously transmitted to the upstream node, and Step 1116 is repeatedly executed.

### Embodiment 2

In the example embodiment, for the Lock operation on a multicast branch path, the multicast network structure shown in Fig. 1 is taken as an example for describing a main process of realizing the Lock operation on the multicast branch path as follows:
step 1: for the multicast network structure shown in Fig. 1, when a root node A of an multicast receives an instruction for Locking a branch path (A-B-C), the root node A generates a Lock information message carrying an ID of a branch path to be locked (for example: information such as an ID of the branch path or an ID of a leaf node), and transmits the Lock information message to each leaf node C, D and F along the multicast path;
step 2 : after each leaf node receives the Lock information message from the root node A, each leaf node judges whether there is the branch path where the leaf node locates on which the Lock operation needs to be executed according to the ID of the branch path or the address ID of the leaf node in the Lock information message. when the branch paths where the leaf node D and F locates do not need to be locked, the leaf node D and F can directly discard the Lock information message without processing;
step 3: when the leaf node C needs to be locked or receives a Lock instruction, the leaf node C can regenerate a Lock information message carrying an ID of the multicast path, and transmits the Lock information message to its directly-adjacent upstream node B on the multicast path (the Lock information message may be transmitted to the upstream node B through a control plane or management plane or data plane);
step 4: after the upstream node B receives the Lock information message from the leaf node C, the upstream node B performs analysis and processing, and judges whether there are downstream nodes on which the Lock operation does not need to be executed on the upstream node B according to the ID of the multicast path in the Lock information message. In the example embodiment, there is the downstream node D on which the Lock operation does not need to be executed on the upstream node B, , then the upstream node B stops transmitting the Lock information message to the upstream node A, meanwhile, the service on the branch path B-C is locked, and the transmission of the service is stopped; and
step 5: when the Lock operation needs to be executed on the node C and node D, and after receiving the Lock information message from the node C and node D, the node B determines that there is no downstream node on which the Lock operation does not need to be executed on the multicast path, and continues transmitting the Lock information message to the upstream node A. After receiving the Lock information message from the downstream node B, the upstream node A judges whether there is further a branch path (A-E-F) on which the Lock operation does not need to be executed, then locks the branch path A-B, and stops the service transmission on the branch path.

In another embodiment, a software is further provided, which is configured to execute the technical solutions described in the embodiments and the example embodiments.

In another embodiment, a storage medium is further provided, in which the software is stored, the storage medium including, but not limited to, a compact disk, a floppy disk, a hard disk, an erasable memory and the like.

Obviously, those skilled in the art should know that each component or step of the embodiment of the present invention can be implemented by a universal computing device, and the components or steps can be concentrated on a single computing device or distributed on a network formed by a plurality of computing devices, and can optionally be implemented by programmable codes executable for the computing devices, so that the components or steps can be stored in a storage device for execution with the computing devices, or can form each integrated circuit component, or multiple components or steps therein can form a single integrated circuit component for implementation. As a consequence, the present invention is not limited to any specific hardware and software combination.

The above is only the example embodiment of the present invention and not intended to limit the present invention, and for those skilled in the art, the present invention can have various modifications and variations. Any modifications, equivalent replacements, improvements and the like within the spirit and principle of the present invention shall fall within the scope of protection of the present invention.

## Claims

1. A method for executing an operation, **characterized by** comprising:
determining, by a leaf node, that the leaf node needs to execute a predetermined operation; and
notifying, by the leaf node, an upstream node on a multicast path where the leaf node locates, to execute the predetermined operation on a branch path where the leaf node locates.

2. The method according to claim 1, **characterized in that** notifying, by the leaf node, the upstream node on the multicast path where the leaf node locates, to execute the predetermined operation on the branch path where the leaf node locates comprises:
transmitting, by the leaf node, a second information message to a first upstream node directly-adjacent to the leaf node on the multicast path where the leaf node locates, wherein the second information message is used for indicating that the branch path where the leaf node locates needs to execute the predetermined operation;
judging, by the first upstream node, whether there is a branch path, on which the predetermined operation does not need to be executed, on the first upstream node according to the second information message;
based on that a judgment result is that there is the branch path on which the predetermined operation does not need to be executed, executing, by the first upstream node, the predetermined operation on the branch path where the leaf node locates; and
based on that the judgment result is that there is no branch path on which the predetermined operation does not need to be executed, transmitting, by the first upstream node, a second information message to a directly-adjacent upstream node on a multicast path where the first upstream node locates, so that a step of judging whether there is the branch path on which the predetermined operation does not need to be executed according to the second information message is repeatedly executed.

3. The method according to claim 2, **characterized in that** the second information message carries an identifier of the multicast path and/or an identifier of the branch path on which the predetermined operation needs to be executed, and judging, by the first upstream node, whether there is the branch path on which the predetermined operation does not need to be executed, on the first upstream node according to the second information message comprises:
judging, by the first upstream node, whether there is the branch path on which the predetermined operation does not need to be executed according to the identifier of the multicast path and/or the identifier of the branch path on which the predetermined operation needs to be executed.

4. The method according to any one of claims 1 to 3, **characterized in that** determining, by the leaf node, that the leaf node needs to execute the predetermined operation comprises:
receiving, by the leaf node, an operation instruction corresponding to the predetermined operation; and/or,
receiving, by the leaf node, a first information message from a root node, wherein the first information message is used for instructing the leaf node to execute the predetermined operation.

5. The method according to claim 4, **characterized in that** the first information message carries an identifier of the branch path on which the predetermined operation needs to be executed and/or an identifier of the leaf node, and determining, by the leaf node, that leaf node needs to execute the predetermined operation comprises:
determining, by the leaf node, that the leaf node needs to execute the predetermined operation according to the identifier of the branch path on which the predetermined operation needs to be executed and/or the identifier of the leaf node.

6. The method according to any one of claims 1 to 5, **characterized in that** the predetermined operation is a service Lock operation.

7. A method for executing an operation, **characterized by** comprising:
receiving, by an upstream node on a multicast path where a leaf node locates, a notice from the leaf node to notify the upstream node to execute a predetermined operation on a branch path where the leaf node locates; and
judging, by the upstream node, whether the predetermined operation is to be executed on the branch path where the leaf node locates according to the notice.

8. The method according to claim 7, **characterized in that** judging, by the upstream node, whether the predetermined operation is to be executed on the branch path where the leaf node locates according to the notice comprises:
judging, by the upstream node, whether there is a branch path on which a predetermined operation corresponding to a second information message does not need to be executed according to the notice;
based on that a judgment result is that there is the branch path on which the predetermined operation corresponding to the second information message does not need to be executed according to the notice, executing, by the upstream node, the predetermined operation on the branch path where the leaf node locates; and
based on that the judgment result is that there is no branch path on which the predetermined operation corresponding to the second information message does not need to be executed according to the notice, transmitting, by the upstream node, the notice to a directly-adjacent upstream node on a multicast path where the upstream node locates, so that a step of judging whether there is the branch path on which the predetermined operation does not need to be executed according to the notice is repeatedly executed.

9. The method according to claim 7 or 8, **characterized in that** judging, by the upstream node, whether the predetermined operation is to be to executed on the branch path where the leaf node locates according to the notice comprises:
receiving, by the upstream node, a second information message from the leaf node, wherein the second information message carries an identifier of the multicast path and/or an identifier of the branch path on which the predetermined operation needs to be executed; and
judging, by the upstream node, whether there is the branch path on which the predetermined operation does not need to be executed or not according to the identifier of the multicast path and/or the identifier of the branch path on which the predetermined operation needs to be executed.

10. The method according to any one of claims 7 to 9, **characterized in that** the predetermined operation is a service Lock operation.

11. A device for executing an operation, located in a leaf node, **characterized by** comprising:
a determining component, configured to determine that the leaf node needs to execute a predetermined operation; and
a notifying component, configured to notify an upstream node on a multicast path where the leaf node locates, to execute the predetermined operation on a branch path where the leaf node locates.

12. A device for executing an operation, located in an upstream node on a multicast path where a leaf node locates, **characterized by** comprising:
a receiving component, configured to receive a notice from the leaf node, to notify the upstream node to execute a predetermined operation on a branch path where the leaf node locates; and
a judging component, configured to judge whether the predetermined operation is to be executed on the branch path where the leaf node locates according to the notice.

13. The device according to claim 12, **characterized in that** the judging component comprises:
a judging element, configured to judge whether there is a branch path on which a predetermined operation corresponding to a second information message does not need to be executed according to the notice;
an executing element, configured to, based on that a judgment result is that there is the branch path on which the predetermined operation corresponding to the second information message does not need to be executed according to the notice, execute the predetermined operation on the branch path where the leaf node locates; and
a transmitting element, configured to, based on that the judgment result is that there is no branch path on which the predetermined operation corresponding to the second information message does not need to be executed according to the notice, transmit the notice to a directly-adjacent upstream node on a multicast path where the upstream node locates, so that a step of judging whether there is the branch path on which the predetermined operation does not need to be executed according to the notice is repeatedly executed.
